# FASCICULE DE BREVET EUROPEEN

(11) **EP 1 165 391 B1**
(45) Date de publication et mention de la délivrance du brevet: **27.11.2002**
(21) Numéro de dépôt: 00912727.5
(22) Date de dépôt: 22.03.2000
(51) Int. Cl.: B65D 41/34, B29C 45/44

(54) **BOUCHON POUR RECIPIENT A COL FILETE ET A COLLERETTE D'ACCROCHAGE**
SCHRAUBKAPPE VERSEHEN MIT EINEM ORIGINALITÄTSBAND FÜR BEHÄLTER
CLOSURE CAP FOR CONTAINER WITH THREADED NECK AND FIXING FLANGE

(30) Priorité: 23.03.1999 LU 90375
(43) Date de publication de la demande: 02.01.2002
(73) Titulaire: Prispa Holding S.A., 2086 Luxembourg (LU)
(72) Inventeur: FRANCHET, Alain, L-1628 Luxembourg (LU)
(74) Mandataire: Busnel, Jean-Benoît
(86) Numéro de dépôt international: FR0000719
(87) Numéro de publication internationale: WO00056618

(56) Documents cités:
- EP-A- 0 213 742
- EP-A- 0 390 412
- EP-A- 0 683 106
- EP-A- 0 752 373
- EP-A- 0 801 006
- WO-A-00/12402
- WO-A-92/03348
- WO-A-97/27037
- JP-A- 10 152 156
- US-A- 5 846 471

## Description

La présente invention concerne un procédé de fabrication d'un bouchon pour récipient à col fileté et à collerette d'accrochage selon le préambule de la revendication 1.

Cette invention s'applique plus particulièrement au bouchage de récipients de boissons éventuellement carbonatées, pour lesquels les exigences d'étanchéité et d'inviolabilité sont très sévères.

Le US 4 801 031 et le EP 0 390 412 décrivent des bouchons comprenant un élément supérieur d'étanchéité destiné à être vissé sur le col fileté d'un récipient à collerette d'accrochage et un élément inférieur d'inviolabilité destiné à être retenu, d'une part, par ladite collerette et, d'autre part, audit élément supérieur par une zone de liaison susceptible d'être rompue au moins partiellement lors du dévissage, ledit élément inférieur comportant une jupe latérale externe prolongée à sa partie inférieure par une bande souple pourvue de saillies. Le document EP 0752373A décrit un bouchon, et donc un procédé de fabrication d'un tel bouchon, selon le préambule de la revendication 1.

Cependant, dans ces modes de réalisation la bande souple est toujours moulée en position basse puis retournée vers l'intérieur avant son utilisation ou lors du bouchage du récipient après conditionnement de la boisson.

Le vissage du bouchon sur le col du récipient provoque ainsi un écartement radial vers l'extérieur de l'élément inférieur, au passage de la collerette d'accrochage. Cet effet néfaste résulte de la résistance au pliage vers l'intérieur de la bande qui se trouve sous contraintes, du fait de la mémoire de forme du matériau.

Ces modes de réalisations entraînent également des difficultés de vissage en mode automatique sur les lignes d'embouteillage du fait que les efforts à fournir doivent vaincre la résistance à la déformation de l'élément inférieur, ce qui a une incidence sur le couple à appliquer et sur la solidité de la zone de liaison.

Par ailleurs, ces modes de réalisation ne peuvent offrir un niveau d'inviolabilité satisfaisant puisque la bande souple se rattache directement au bord inférieur de la jupe latérale en libérant ainsi, en position repliée, un espace suffisant entre l'élément inférieur et le récipient pour permettre l'introduction d'un outil et le dégagement du bouchon sans rupture de la zone de liaison.

Le US 5,846,471 divulgue un procédé de fabrication d'un bouchon au moyen d'une presse, dans lequel l'élément d'inviolabilité comporte des ailettes réalisées par moulage en étant orientées vers l'intérieur et vers le haut.

Cependant, au retrait du noyau lors de l'éjection du moule, les ailettes ne reviennent pas dans leur position de moulage du fait de la perte d'élasticité résultant d'une étape précédente de retournement au démoulage.

De plus, l'étape traditionnelle de dévêtissage ne permet pas à elle seule un retour complet vers la position naturelle de moulage.

La présente invention a pour but de résoudre ces problèmes techniques de manière satisfaisante.

Ce but est atteint, selon l'invention, au moyen d'un procédé de fabrication d'un bouchon du type précédent au moyen d'une presse, caractérisé en ce qu'avant refroidissement de la bande souple, on aide et on guide mécaniquement son retour élastique vers sa position naturelle de moulage.

Selon une caractéristique avantageuse, on réalise l'épaisseur de la paroi de la bande interne de l'élément inférieur avec une valeur moyenne comprise entre 20% et 50% de la valeur moyenne de l'épaisseur de la jupe externe et, de préférence, en fonction de la matière utilisée, comprise entre 0,2 et 0,4 mm pour un col standard de 28 mm.

Selon une autre caractéristique, on réalise lesdites saillies de la bande souple avec des faces sensiblement triangulaires en forme de demi-pyramides inversées.

Selon une première variante de mise en oeuvre, l'aide et le guidage mécaniques de la bande souple sont effectuées au moyen d'un déplacement relatif du noyau du moule.

Selon une seconde variante, l'aide et le guidage mécaniques de la bande souple sont effectués au moyen d'un organe agissant dès la sortie de presse et après éjection du moule.

Selon une caractéristique avantageuse du procédé, on réalise ladite zone de liaison dans une gorge périphérique extérieure.

En outre, il est possible de réaliser le rattachement de la bande à la face interne de la jupe latérale par une zone coudée.

Selon une variante, on réalise sur le bord inférieur de la jupe latérale un tronçon d'extrémité libre s'étendant sous le niveau de ladite zone coudée.

Selon une autre variante, on réalise sur ladite zone coudée, au moins un orifice permettant l'évacuation d'éventuels résidus.

Selon encore une autre caractéristique, on réalise sur la face interne de la jupe un jonc de centrage de l'élément inférieur destiné à venir en contact radial avec la collerette d'accrochage pour parfaire l'inviolabilité.

Le bouchon de l'invention s'adapte très facilement aux différents outils utilisés sur les lignes d'embouteillage automatique et en particulier à tous types de visseuses y compris celles travaillant en "prise à la volée" à très grandes cadences.

L'élément supérieur de ce bouchon peut être autojointant ou recevoir tout type de joint d'étanchéité sans que cela puisse compromettre l'inviolabilité assurée par l'élément inférieur.

Le montage du bouchon sur le récipient peut ainsi s'effectuer avec des efforts très faibles, du fait même que la bande interne souple n'est le siège d'aucune contrainte en position retournée et possède donc dans cette position, une capacité de déformation élastique et/ou de flexion importante.

Un autre avantage de l'invention réside dans la diminution du poids du bouchon notamment par réduction de l'épaisseur des parois respectives de l'élément supérieur et de l'élément inférieur (jupe externe et/ou bande interne).

Ce gain de matière qui présente un grand intérêt sur le plan économique ne s'accompagne d'aucune dégradation des qualités requises du bouchon tant vis-à-vis de l'étanchéité que de l'inviolabilité.

L'invention sera mieux comprise à la lecture de la description qui va suivre en référence aux dessins annexés sur lesquels :
- les figures 1A et 1B représentent des vues en coupe de deux modes de réalisation du bouchon de l'invention ;
- la figure 2 représente une vue en coupe d'une variante de réalisation du bouchon de la figure 1A après montage sur le col d'un récipient ;
- la figure 3 représente une vue en coupe d'une variante des bouchons des figures 1A et 1B après montage sur le col d'un récipient;
- les figures 4A,4B,4C,4D,4E et 4F représentent des demi-vues schématiques en coupe des différentes phases du procédé de fabrication du bouchon de l'invention.

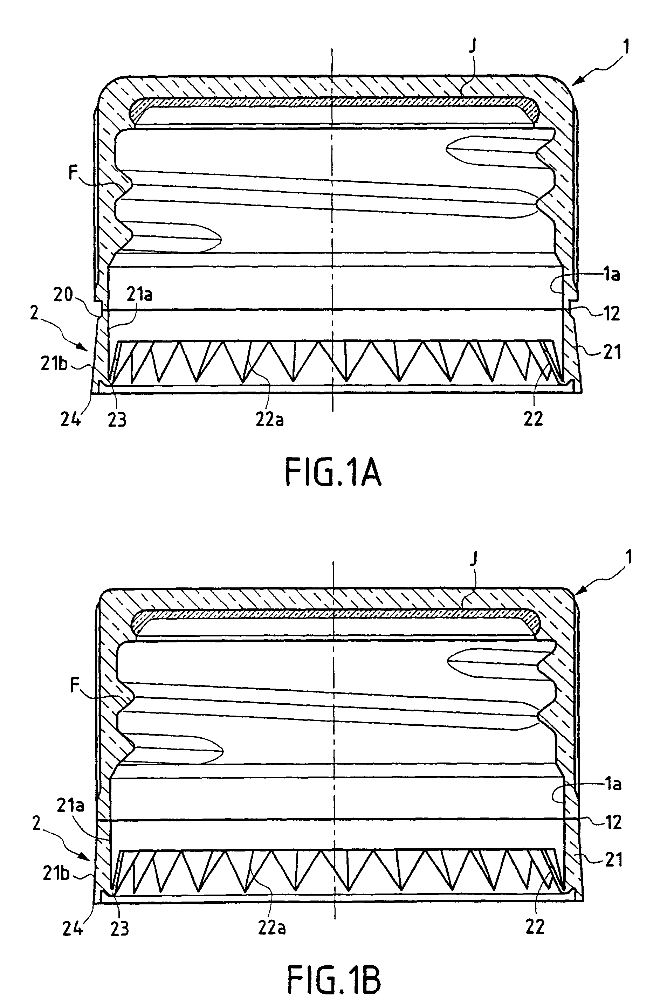

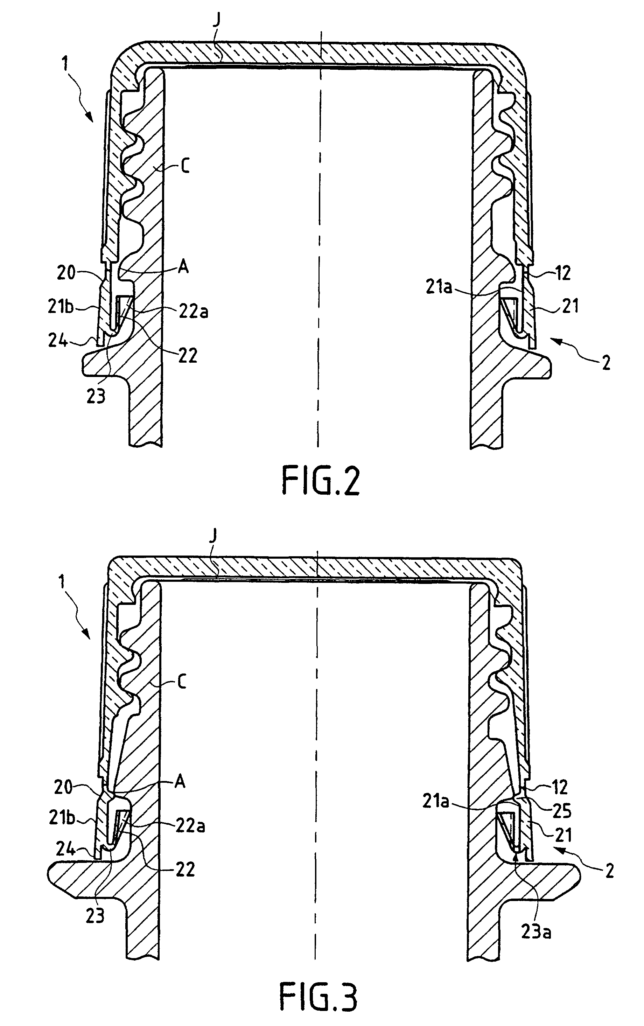

Le bouchon représenté sur les figures 1A et 1B comprend un élément supérieur 1 destiné à être vissé sur le col fileté C (voir figures 2 et 3) d'un récipient à collerette d'accrochage A, pour en assurer l'étanchéité.

A cet effet, l'élément supérieur 1 est pourvu d'un filetage F et d'un joint J.

Le bouchon de l'invention comprend aussi un élément inférieur 2 assurant l'inviolabilité du récipient.

L'élément inférieur 2 est destiné à être retenu, d'une part, par la collerette d'accrochage A du col C et, d'autre part, à l'élément supérieur 1 par une zone 12 susceptible d'être rompue, au moins, partiellement, lors du dévissage de l'élément supérieur 1 à la première ouverture du récipient.

L'élément inférieur 2 comporte une jupe latérale externe 21 prolongée à sa partie inférieure, par une bande souple interne 22, pourvue de saillies 22a.

Les saillies 22a sont du type de celles décrites et représentées, par exemple, dans le brevet EP 0 635 434 où elles comportent des faces sensiblement triangulaires délimitant des demi-pyramides inversées ou des ondulations.

Le bord supérieur de la bande interne 22 est destiné à venir en butée vers le haut contre la face inférieure de la collerette A lors du dévissage de l'élément supérieur 1, ce qui retient l'élément inférieur 2 vers le bas et provoque la rupture au moins partielle de la zone de liaison 12.

Selon l'invention, l'ensemble du bouchon est réalisé d'une seule pièce par moulage (compression ou injection) avec la bande souple 22 directement orientée vers l'intérieur et vers le haut, c'est-à-dire en position relâchée et pliée vers l'élément supérieur comme représenté sur les figures 1A et 1B.

A la différence de l'art antérieur, le mode de réalisation de l'invention n'implique pas de retournement forcé ultérieur de la bande 22 vers l'intérieur après moulage puisqu'elle se trouve déjà dans cette position à l'intérieur du moule.

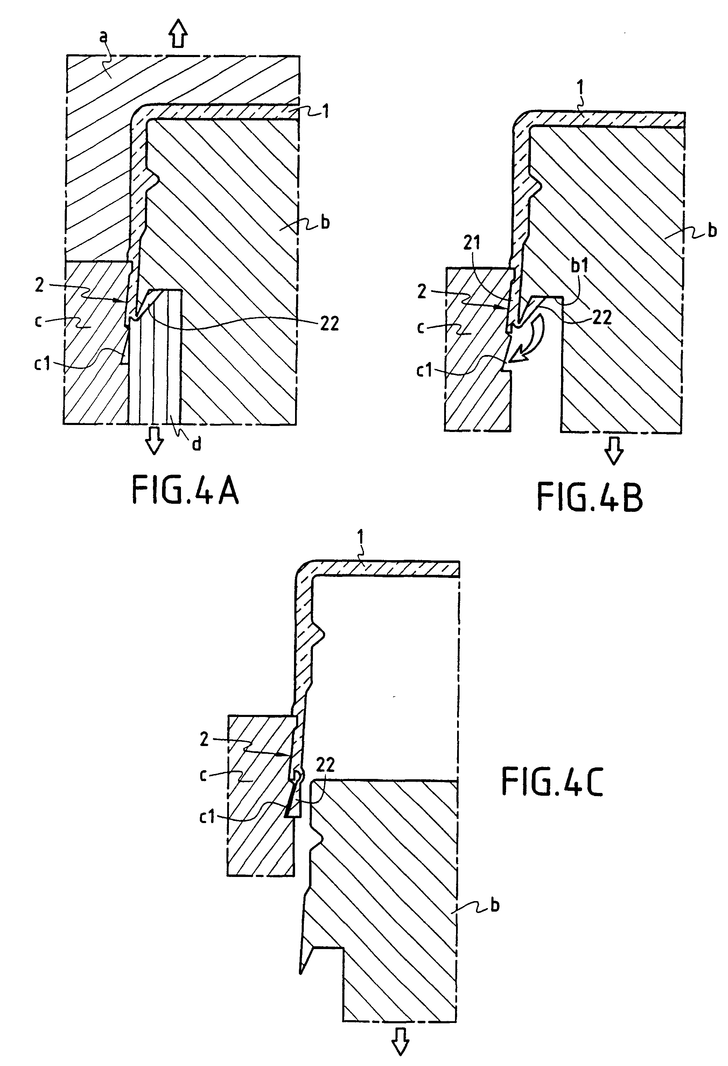

Les figures 4A à 4F sont des demi-vues en coupe du bouchon dans le moule de fabrication dont seulement quatre pièces sont représentées. Bien entendu, la disposition verticale représentée sur les figures avec la bande 22 en partie inférieure, est choisie de façon arbitraire, toute autre orientation pouvant convenir pour le moulage.

La pièce supérieure **a** forme l'élément supérieur 1 du bouchon tandis que le noyau **b** délimite son volume libre interne.

Les pièces inférieures **c, d** sont destinées quant à elles à réaliser l'élément inférieur 2 du bouchon (figure 4A).

Lors de l'ouverture du moule, les pièces **a, b, c** et **d** se déplacent dans le sens des flèches.

Les pièces **a** et **d** sont écartées en premier lieu (figure 4B).

Le retrait de la pièce **d** libère la bande souple 22 qui est repoussée vers le bas en se dépliant par l'épaulement **b1** du noyau **b** à déplacement axial (figure 4C).

La bande 22 s'escamote en venant alors se loger dans l'évidement **c1** de profil complémentaire ménagé sur la face interne de la pièce latérale **c** en laissant passer le noyau **b**.

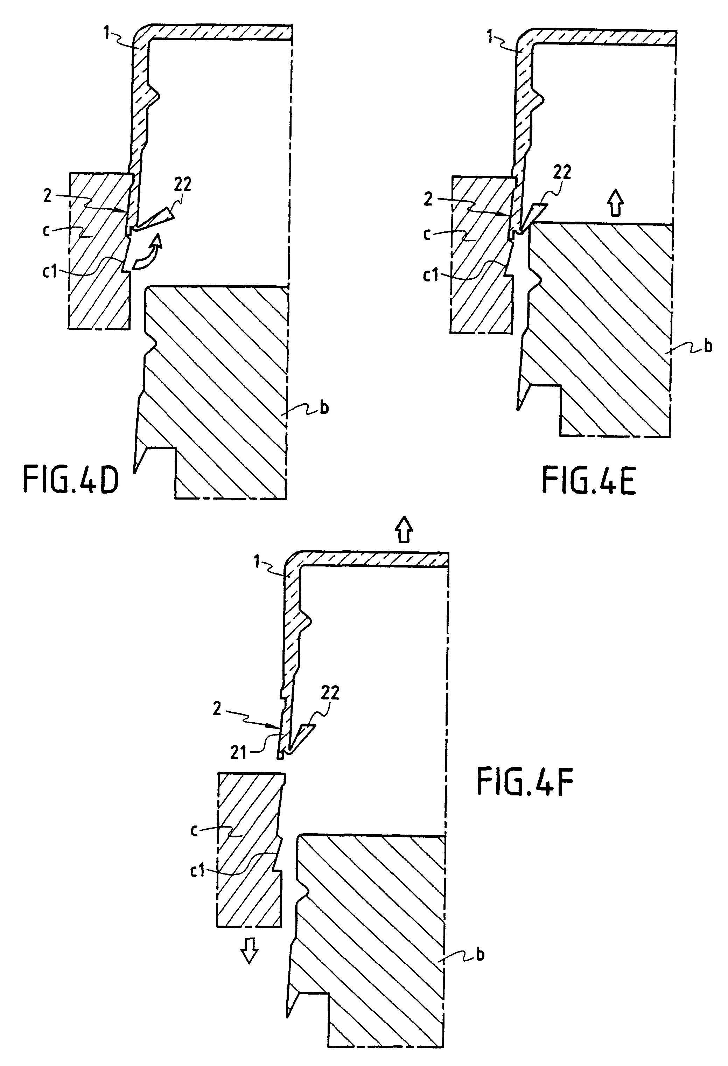

Une fois libérée par le noyau **b**, la bande 22 commence à revenir naturellement vers sa position de moulage(figure 4D), la jupe 21 restant engagée et retenue dans la pièce **c**. Pendant son retour la bande 22 est, de préférence, aidée et guidée mécaniquement avant son refroidissement, soit, dans un premier cas, par un élément du moule tel que le noyau **b** en déplacement relatif par rapport à la pièce **c** (figure 4E) soit, dans un second cas, par un organe mécanique spécifique (non représenté) agissant dès la sortie de presse après éjection du bouchon.

Dans les deux cas, l'éjection du bouchon nécessite le dégagement de la jupe 21 de la pièce latérale **c**. Ce dégagement peut être obtenu par la poussée d'un éjecteur central et/ou le mouvement relatif de la pièce latérale **c** (figure 4F) et/ou de l'air comprimé. Le bouchon libéré est ensuite récupéré sur une ligne de convoyage (non représentée).

Ainsi, le démoulage de l'élément inférieur 2 peut s'effectuer par déformation forcée de la bande 22 qui se déplie élastiquement vers l'extérieur et vers le bas du bouchon.

Par conséquent, dès la fabrication du bouchon, la bande 22 s'étend radialement vers le haut à l'intérieur de l'élément inférieur 2 dans sa position de repos de façon à n'être le siège d'aucune contrainte interne dans cette position.

Il en résulte que pour le montage du bouchon sur le col C, lors du passage de la collerette d'accrochage A, la bande 22 peut aisément se déformer et/ou fléchir de façon élastique vers l'extérieur jusqu'à venir éventuellement en contact avec la face interne 21a de la jupe 21. Toutefois, ce débattement ne s'accompagne d'aucun déport de la jupe 21, ce qui permet notamment de fragiliser au maximum la zone de liaison 12 sans entraîner de risque de rupture au vissage.

En effet, la présence des saillies 22a procure une grande souplesse à la bande 22 dont le diamètre intérieur peut ainsi varier pour faciliter le passage de la collerette A quelles que soient les tolérances dimensionnelles de cette collerette.

Dans le mode de réalisation des figures 1A et 1B, les génératrices de la face interne 21a de la jupe latérale 21 sont alignées avec les génératrices de la face latérale interne la de l'élément supérieur 1, sous le filetage F.

L'épaisseur moyenne de la paroi de la bande interne 22 est plus faible que l'épaisseur moyenne de la jupe latérale externe 21, et sa valeur est comprise entre 20% et 50% de l'épaisseur moyenne de la jupe 21 en étant de préférence, en fonction de la matière utilisée, comprise entre 0,2 mm et 0,4 mm pour un col standard de 28 mm.

La bande 22 est rattachée à la face interne de la jupe 21 par une zone coudée 23 qui joue le rôle d'articulation dans le débattement de la bande 22. De préférence, comme représenté sur les figures, le bord inférieur de la jupe 21 est libre et délimite un tronçon d'extrémité 24 s'étendant vers le bas sous le niveau de la zone coudée 23.

La longueur du tronçon 24 est adaptée à la géométrie du col C pour interdire toute possibilité de prise du bouchon par l'intérieur ou toute introduction d'un outil ou encore toute manoeuvre susceptible de conduire à une ouverture frauduleuse du récipient, sans séparation de l'élément inférieur 2.

Le cas échéant, au moins un orifice 23a est ménagé au travers de la zone 23, comme représenté sur la partie droite de la figure 3. Cet orifice est destiné à permettre l'évacuation d'éventuels résidus de produit liquide provenant d'une opération de nettoyage et/ou d'une manoeuvre défectueuse de remplissage du récipient et à éviter ainsi les risques de pollution ou de contamination bactérienne. L'orifice 23a pourra prendre différentes formes en fonction de la nature et notamment de la viscosité du produit de nettoyage et/ou du produit conditionné.

Dans le mode de réalisation des figures 1A et 1B, la zone de liaison 12 est continue et comporte des pontets moulés ou des découpes circonférentielles discontinues réalisées, par exemple, par fentage.

Selon une variante non représentée, il est prévu de réaliser aussi sur toute la hauteur de la jupe 21 jusqu'à la zone de liaison 12, une ou plusieurs découpes axiales et/ou inclinées délimitant au moins un pontet résistant permettant de conserver, au moins partiellement, la liaison entre les éléments supérieur 1 et inférieur 2 après dévissage du bouchon.

Cette variante trouve une utilité particulière dans les emballages consignés ou recyclables pour lesquels le récipient et le bouchon doivent être traités séparément en raison de différences de matières.

Dans le mode de réalisation des figures 1A, 2 et 3 la zone de liaison est située dans une gorge périphérique 20 ménagée sur la face externe 21b de la jupe 21.

Dans la variante de réalisation de la figure 3, la face interne 21a de la jupe 21 porte un jonc continu ou des pions de centrage 25 destinés à venir en contact radial avec la collerette d'accrochage A pour assurer un positionnement correct de l'élément inférieur 2 sur le col C du récipient en vue de parfaire l'inviolabilité.

## Revendications

1. Procédé de fabrication d'un bouchon au moyen d'une presse, du type comprenant un élément supérieur d'étanchéité (1) destiné à être vissé sur le col fileté (C) d'un récipient à collerette d'accrochage (A) et un élément inférieur d'inviolabilité (2) destiné à être retenu, d'une part, par ladite collerette (A) et, d'autre part, audit élément supérieur (1) par une zone de liaison (12) susceptible d'être rompue au moins partiellement lors du dévissage, ledit élément inférieur (2) comportant une jupe latérale externe (21) prolongée à sa partie inférieure par une bande souple (22) pourvue de saillies (22a), réalisée par moulage en étant directement orientée vers l'intérieur et vers le haut de façon à n'être le siège d'aucune contrainte interne dans cette position, **caractérisé en ce qu'**avant refroidissement de la bande souple (22), on aide et on guide mécaniquement son retour élastique vers sa position naturelle de moulage.

2. Procédé selon la revendication 1, **caractérisé en ce qu'**on réalise l'épaisseur de la paroi de la bande interne (22) de l'élément inférieur (2) avec une valeur moyenne comprise entre 20% et 50% de la valeur moyenne de l'épaisseur de la jupe externe (21) et, comprise entre 0,2 mm et 0,4 mm pour un col standard de 28mm.

3. Procédé selon l'une des revendications précédentes, **caractérisé en ce qu'**on réalise lesdites saillies (22a) de la bande souple (22) avec des faces sensiblement triangulaires en forme de demi-pyramides inversées.

4. Procédé selon l'une des revendications précédentes, **caractérisé en ce que** l'aide et le guidage mécaniques de la bande souple (22) sont effectués avant éjection du bouchon au moyen d'un déplacement relatif du noyau (b) du moule.

5. Procédé selon l'une des revendications 1 à 3, **caractérisé en ce que** l'aide et le guidage mécaniques de la bande souple (22) sont effectués au moyen d'un organe agissant dès la sortie de presse et après éjection du bouchon.

6. Procédé selon l'une des revendications précédentes, **caractérisé en ce que** on réalise ladite zone de liaison (12) dans une gorge périphérique extérieure (20).

7. Procédé selon l'une des revendications précédentes, **caractérisé en ce que** on réalise le rattachement de la bande (22) à la face interne (21a) de la jupe latérale (21) par une zone coudée (23).

8. Procédé selon la revendication 7, **caractérisé en ce que** on réalise, sur le bord inférieur de la jupe latérale (21), un tronçon d'extrémité libre (24) s'étendant sous le niveau de ladite zone coudée (23).

9. Procédé selon la revendication 7 ou 8, **caractérisé en ce que** on réalise sur ladite zone coudée (23), au moins un orifice (23a) permettant l'évacuation d'éventuels résidus.

10. Procédé selon l'une des revendications précédentes, **caractérisé en ce que** on réalise, sur la face interne (21a) de la jupe (21) un jonc de centrage (25) de l'élément inférieur (2) destiné à venir en contact radial avec la collerette d'accrochage (A) pour parfaire l'inviolabilité.

## Claims

1. A method of manufacturing a stopper by means of a press, the stopper being of the type comprising both a top sealing element (1) for screwing onto the threaded neck (C) of a receptacle having a retaining collar (A), and a bottom tamperproofing element (2) designed to be retained firstly by said collar (A) and secondly by said top element (1) via a connection zone (12) suitable for being broken at least in part during unscrewing, said bottom element (2) comprising an outer lateral skirt (21) extended at its bottom end by a flexible band (22) provided with projections (22a), the band being made by molding so as to be oriented directly inwards and upwards so as to avoid being the seat of any internal stress while in said position, the method being **characterized in that** prior to cooling of the flexible band (22), its elastic return towards its natural molding position is assisted and guided mechanically.

2. A method according to claim 1, **characterized in that** the wall thickness of the inner band (22) of the bottom element (2) is made with a mean value lying in the range 20% to 50% of the mean thickness of the outer skirt (21), and for a standard 28 mm neck, it is of a thickness lying in the range 0.2 mm to 0.4 mm.

3. A method according to any preceding claim, **characterized in that** said projections (22a) of the flexible band (22) are made with essentially triangular faces forming upside-down half-pyramids.

4. A method according to any preceding claim, **characterized in that** the flexible band (22) is assisted and guided mechanically before the stopper is ejected by means of a relative movement of the mold core (b).

5. A method according to any one of claims 1 to 3, **characterized in that** the flexible band (22) is assisted and guided mechanically by means of a member that comes into play when the stopper leaves the press after being ejected.

6. A method according to any preceding claim, **characterized in that** said connection zone (12) is provided in an outer peripheral groove (20).

7. A method according to any preceding claim, **characterized in that** the band (22) is connected to the inside face (21a) of the lateral skirt (21) via a curved zone (23).

8. A method according to claim 7, **characterized in that** a free end segment (24) extending below the level of said curved zone (23) is provided on the bottom edge of the lateral skirt (21).

9. A method according to claim 7 or 8, **characterized in that** at least one orifice (23a) enabling any residue to be evacuated is provided on said curved zone (23).

10. A method according to any preceding claim, **characterized in that** a centering bead (25) for centering the bottom element (2) and designed to come into radial contact with the retaining collar (A) so as to improve tamperproofing is made on the inside face (21a) of the skirt (21).

## Patentansprüche

1. Verfahren zur Herstellung eines Verschlusses mit Hilfe einer Presse, umfassend ein oberes Dichtungselement (1), das dazu bestimmt ist, auf den Gewindehals (C) eines Behälters mit Befestigungskragen (A) geschraubt zu werden, und ein unteres Unverletzlichkeitselement (2), das dazu bestimmt ist, einerseits von dem Kragen (A) und andererseits am oberen Element (1) durch eine Verbindungszone (12) gehalten zu werden, welche in der Lage ist, zumindest teilweise beim Abschrauben durchbrochen zu werden, welches untere Element (2) eine äußere seitliche Schürze (21) umfasst, die an ihrem unteren Teil durch ein flexibles Band (22) verlängert ist, das mit Vorsprüngen (22a) versehen und durch Formen hergestellt ist, indem es direkt nach innen und nach oben gerichtet ist, so dass es keinerlei innerer Spannung in dieser Position ausgesetzt ist, **dadurch gekennzeichnet, dass** vor dem Abkühlen des flexiblen Bandes (22) dessen elastische Rückkehr in seine natürliche Position des Formens unterstützt und geführt wird.

2. Verfahren nach Anspruch 1, **dadurch gekennzeichnet, dass** die Stärke der Wand des inneren Bandes (22) des unteren Elements (2) mit einem durchschnittlichen Wert zwischen 20 % und 50 % des durchschnittlichen Wertes der Dicke der äußeren Schürze (21) und damit zwischen 0,2 mm und 0,4 mm bei einem Standardhals von 28 mm hergestellt wird.

3. Verfahren nach einem der vorhergehenden Ansprüche, **dadurch gekennzeichnet, dass** die Vorsprünge (22a) des flexiblen Bandes (22) mit im Wesentlichen dreieckigen Flächen in Form von umgekehrten Halbpyramiden hergestellt sind.

4. Verfahren nach einem der vorhergehenden Ansprüche, **dadurch gekennzeichnet, dass** das mechanische Unterstützen und Führen des flexiblen Bandes (22) vor dem Ausstoßen des Verschlusses mit Hilfe einer relativen Verschiebung des Kerns (b) der Form erfolgen.

5. Verfahren nach einem der Ansprüche 1 bis 3, **dadurch gekennzeichnet, dass** das mechanische Unterstützen und Führen des flexiblen Bandes (22) mit Hilfe eines Elements erfolgen, das bereits am Ausgang der Presse und nach dem Ausstoßen des Verschlusses wirkt.

6. Verfahren nach einem der vorhergehenden Ansprüche, **dadurch gekennzeichnet, dass** die Verbindungszone (12) in einer äußeren Umfangsnut (20) ausgeführt ist.

7. Verfahren nach einem der vorhergehenden Ansprüche, **dadurch gekennzeichnet, dass** die Anbindung des Bandes (22) an die Innenfläche (21a) der seitlichen Schürze (21) durch eine gekrümmte Zone (23) erfolgt.

8. Verfahren nach Anspruch 7, **dadurch gekennzeichnet, dass** am unteren Rand der seitlichen Schürze (21) ein freier Endabschnitt (24) dargestellt ist, der sich unter dem Niveau der gekrümmten Zone (23) erstreckt.

9. Verfahren nach Anspruch 7 oder 8, **dadurch gekennzeichnet, dass** in der gekrümmten Zone (23) mindestens eine Öffnung (23a) ausgeführt ist, die die Beseitigung eventueller Rückstände ermöglicht.

10. Verfahren nach einem der vorhergehenden Ansprüche, **dadurch gekennzeichnet, dass** auf der Innenseite (21a) der Schürze (21) ein Zentrierring (25) für das untere Element (2) dargestellt ist, der dazu bestimmt ist, mit dem Befestigungskragen (A) radial in Kontakt zu kommen, um die Unverletzlichkeit zu gewährleisten.
